# EUROPÄISCHE PATENTSCHRIFT

(11) **EP 4 550 596 B1**
(45) Veröffentlichungstag und Bekanntmachung des Hinweises auf die Patenterteilung: **25.03.2026**
(21) Anmeldenummer: 23207618.2
(22) Anmeldetag: 03.11.2023
(51) Int. Cl.: H02G 1/00, H02G 1/12

(54) **SCHERENWERKZEUG UND WERKZEUGGRUPPE**
SCISSORS TOOL AND TOOL GROUP
OUTIL DE CISEAUX ET GROUPE D'OUTILS

(43) Veröffentlichungstag der Anmeldung: 07.05.2025
(73) Patentinhaber: WEZAG GmbH & Co. KG, 35260 Stadtallendorf (DE)
(72) Erfinder: Zinser, Roman, 35279 Neustadt (DE)
(74) Vertreter: REHBERG HÜPPE + PARTNER

(56) Entgegenhaltungen:
- GB-A- 2 181 687
- US-A- 6 138 362
- US-A1- 2019 210 206
- US-B1- 6 526 661

## Beschreibung

### TECHNISCHES GEBIET DER ERFINDUNG

Die Erfindung betrifft ein Werkzeug, mit dem einerseits ein Ablängen eines Kabels auf eine gewünschte Länge und andererseits ein Einbringen eines Abisolierschnittes in einen Endbereich eines Isolationsmantels des Kabels erfolgen kann. Des Weiteren betrifft die Erfindung eine Werkzeugbaugruppe mit Werkzeugen unterschiedlicher Ausgestaltungen.

### STAND DER TECHNIK

EP 3 054 542 B1 offenbart eine Abisolierzange, welche ein festes Zangenteil mit einem festen Handhebel und einer festen Zangenbacke sowie einen beweglichen Handhebel, der über einen Kniehebeltrieb mit einer beweglichen Zangenbacke gekoppelt ist, aufweist. Die Abisolierzange verfügt über Trennmesser, wobei ein Trennmesser an dem beweglichen Handhebel befestigt ist und mit diesem zur Erzeugung einer Schließbewegung verschwenkt wird in Richtung des anderen Trennmessers. Mittels der Trennmesser kann ein Durchtrennen des Kabels zum Ablängen desselben auf eine gewünschte Länge herbeigeführt werden. Darüber hinaus verfügt die Abisolierzange über an den Zangenbacken geführte Abisoliermesser. Die Schließbewegung der Handhebel und damit der Zangenbacken ist unterteilt in einen Einschneidteilhub und einen Abziehteilhub. In dem Einschneidteilhub schneiden die Abisoliermesser einen Isolationsmantel eines in ein Zangenmaul der Abisolierzange eingelegten Kabels auf gegenüberliegenden Seiten ein. Die Abisoliermesser sind an einem in Längsrichtung des in das Zangenmaul eingelegten Kabels verschieblichen Schlitten gelagert. In dem Abziehteilhub werden die Abisoliermesser infolge der durch die Handhebel herbeigeführten Bewegung des Schlittens derart in Längsrichtung des Kabels bewegt, dass der zuvor zumindest teilweise abgetrennte Endbereich des Isolationsmantels mittels des Abisoliermesser von dem Kabel abgezogen wird.

US 6 526 661 B1 offenbart ein Scherenwerkzeug mit einem ersten Scherenteil und einem zweiten Scherenteil, die über ein Scherenlager verschwenkbar um eine Scherenschwenkachse aneinander gelagert sind. In dem dem Scherenlager abgewandten Endbereich weisen die Scherenteile jeweils eine Fingeraufnahme auf, über die die Verschwenkung der Scherenteile in Schließrichtung herbeiführbar ist. Das Scherenwerkzeug verfügt über drei Werkstückbearbeitungsbereiche, im Bereich welcher jeweils ein Werkstück durch Schließung der Scherenteile ein- oder durchgeschnitten werden kann. In dem am dichtesten am Scherenlager liegenden ersten Werkstückbearbeitungsbereich verfügen die beiden Scherenteile jeweils über ein Paar von Schneidmessern, mittels welchen mit der Schließbewegung der Scherenteile ein Einschneiden des Isoliermantels eines Flachbandkabels erfolgen soll und mittels einer anschließenden Axialbewegung ein Abziehen der derart eingeschnittenen Isolierung von dem Flachbandkabel erfolgen soll. In einem mittigen zweiten Werkstückbearbeitungsbereich bildet ein Scherenteil eine randgeschlossene Aufnahme für ein Kabel mit einem kreisförmigen Querschnitt aus. Das andere Scherenteil trägt in dem zweiten Werkstückbearbeitungsbereich ein Einschneidemesser, welches mit der Schließbewegung der Scherenteile die Isolation des in der Aufnahme angeordneten Kabels einschneidet. Durch Verdrehung des Scherenwerkzeugs um das Kabel kann die Isolation in Umfangsrichtung eingeschnitten werden, und mit anschließender Axialbewegung kann der durch den Umfangseinschnitt abgetrennte Endbereich der Isolation abgezogen werden. Schließlich verfügt das Scherenwerkzeug in dem äußeren dritten Werkstückbearbeitungsbereich über eine offene Schneidausnehmung eines Scherenteils, in welche ein Kabel eingelegt werden kann, sowie ein von dem anderen Scherenteil getragenes Schneidmesser. Mit der Schließbewegung der Scherenteile kann das in der Schneidausnehmung eingelegte Kabel mittels des Schneidmessers ein- oder durchgeschnitten werden. Das Einschneidemesser des zweiten Werkstückbearbeitungsbereichs und ein Schneidmesser des dritten Werkstückbearbeitungsbereichs sind von einem gemeinsamen Klingenkörper ausgebildet. Der Klingenkörper ist verschwenkbar um eine Schwenkachse an dem zugeordneten Scherenteil gelagert. Abseits des Schwenklagers stützt sich der Rücken des Schneidkörpers an einer Rändelschraube ab. Durch Verstellung der Rändelschraube kann eine Einstellung der Einschneidetiefe oder Schneidtiefe des Einschneidmessers in den zweiten Werkstückbearbeitungsbereich sowie des Schneidmessers im dritten Werkstückbearbeitungsbereich erfolgen.

Weiterer Stand der Technik ist aus US 6 138 362 A, US 2019/210206 A1 und GB 2 181 687 A bekannt.

### AUFGABE DER ERFINDUNG

Der vorliegenden Erfindung liegt die Aufgabe zugrunde, ein Werkzeug vorzuschlagen, mittels dessen
a) sowohl ein Durchtrennen eines Kabels
b) als auch ein Einbringen eines Abisolierschnittes in einen Endbereich eines Isolationsmantels des Kabels

möglich ist, welches hinsichtlich
   - der Herstellkosten und/oder
   - der einsetzbaren Materialien und/oder
   - des einsetzbaren Herstellungsverfahrens für die Komponenten und/oder
   - der werkseitigen Montage und/oder
   - der Zahl der erforderlichen Komponenten und/oder
   - der Baugröße und/oder
   - des Bedienkomforts und/oder
   - der Baugröße und optischen Gestaltung
verbessert ist. Des Weiteren liegt der Erfindung die Aufgabe zugrunde, eine Werkzeuggruppe mit mindestens zwei unterschiedlichen Ausführungsformen von Werkzeugen vorzuschlagen, die hinsichtlich des Herstell- und Bevorratungsaufwandes für die Komponenten verbessert ist.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Erfindungsgemäß wird zunächst vorgeschlagen, dass das Werkzeug zum Durchtrennen und zum Einbringen eines Abisolierschnittes nicht als Zangenwerkzeug, sondern vielmehr als Scherenwerkzeug ausgebildet ist. Das Scherenwerkzeug verfügt dabei über ein erstes Scherenteil und ein zweites Scherenteil. Die beiden Scherenteile sind über ein Scherenlager aneinander gelagert, sodass die Scherenteile um eine durch das Scherenlager vorgegebene Scherenschwenkachse gegeneinander verschwenkt werden können.

Die beiden Scherenteile weisen jeweils eine Fingeraufnahme auf, über die die Verschwenkung der Scherenteile in eine Schließrichtung manuell herbeigeführt werden kann, indem jeweils mindestens ein Finger, insbesondere ein Daumen und ein Zeige- oder Mittelfinger, eines Benutzers in eine Fingeraufnahme eingeführt wird, welche dann die Fingerschließkräfte auf die Scherenteile ausüben können. Die Fingeraufnahme kann dabei randoffen sein. Vorzugsweise sind die Fingeraufnahmen aber randgeschlossen (beispielsweise als kreisförmige Durchgangsausnehmung, elliptische Durchgangsausnehmung oder beliebig anders geformte randgeschlossene Ausnehmung der Scherenteile) ausgebildet.

Die Scherenteile weisen jeweils ein Trennmesser auf. Die Trennmesser werden mit der Verschwenkung der Scherenteile in eine Schließrichtung, die durch die in der Fingeraufnahme durch den Benutzer aufgebrachten Fingerschließkräfte herbeigeführt wird, aufeinander zu bewegt. Befindet sich ein Kabel zwischen den Trennmessern, kann auf diese Weise ein Durchtrennen des Kabels erfolgen. Somit gewährleistet das Scherenwerkzeug die erste gewünschte Funktion der Ermöglichung eines Durchtrennens eines Kabels.

Erfindungsgemäß wird vorgeschlagen, dass in die Fingeraufnahme des ersten Scherenteils ein Betätigungselement integriert ist. Das Scherenwerkzeug verfügt neben den Trennmessern über ein Abisolierschnittmesser. Das Abisolierschnittmesser ist beweglich an dem ersten Scherenteil geführt. Die Erfindung schlägt vor, dass das in die Fingeraufnahme integrierte Betätigungselement über eine Antriebsverbindung mit dem Abisolierschnittmesser verbunden ist. Betätigt der Benutzer das Betätigungselement, kann somit eine Bewegung des Abisolierschnittmessers in eine gewünschte Stellung erfolgen. Im Rahmen der Erfindung wird somit die Fingeraufnahme des ersten Scherenteils multifunktional genutzt, da über diese Fingeraufnahme einerseits die Schließbewegung der Trennmesser zum Durchtrennen des Kabels herbeigeführt werden kann und andererseits über das in die Fingeraufnahme integrierte Betätigungselement eine Bewegung des Abisolierschnittmessers in eine gewünschte Stellung herbeigeführt werden kann.

Im Rahmen der Erfindung kann eine beliebige Antriebsverbindung, insbesondere eine getriebliche Verbindung, eine Hebelverbindung oder eine anderweitige Verbindung, unter Umständen auch mit einer Über- oder Untersetzung der Kräfte und Bewegung, ausgebildet sein. Vorzugsweise findet als Antriebsverbindung eine starre Verbindung Einsatz, sodass das Betätigungselement einerseits und das Abisolierschnittmesser fest miteinander verbunden sind.

Vorzugsweise verfügt die Fingeraufnahme des ersten Scherenteils über zwei voneinander getrennte und in Umfangsrichtung versetzte Umfangsbereiche. Sind die beiden Finger des Benutzers in die beiden Fingeraufnahmen der Scherenteile eingesetzt und erfolgt eine Betätigung der Scherenteile zur Herbeiführung der Schließbewegung der Trennmesser, wirkt ein Finger auf einen ersten Umfangsbereich der Fingeraufnahme des ersten Scherenteils ein. Die dabei erzeugten Fingerschließkräfte sind dann in Umfangsrichtung um das Scherenlager orientiert, sodass der erste Umfangsbereich eine Flächennormale hat, die ungefähr in Umfangsrichtung um das Scherenlager orientiert ist. Um eine ungewollte Betätigung des Betätigungselements während dieser manuell herbeigeführten Bewegung der Trennmesser zu vermeiden, ist das Betätigungselement außerhalb dieses ersten Umfangsbereich, nämlich in einem zweiten Umfangsbereich, angeordnet. Der zweite Umfangsbereich, in dem das Betätigungselement angeordnet ist, kann dann in einem beliebigen anderen Umfangsbereich angeordnet sein. Beispielsweise möglich ist, dass dieser zweite Umfangsbereich auf der gegenüberliegenden Seite zu dem ersten Umfangsbereich angeordnet ist oder die Flächennormale des zweiten Umfangsbereich ungefähr in Richtung des Scherenlagers orientiert ist, wobei auch Abweichungen von +/- 30°, +/- 20° oder +/- 15° der Flächennormale des zweiten Umfangsbereichs gegenüber der Verbindung zu dem Schwenklager möglich sind.

Für einen weiteren Vorschlag der Erfindung verfügt das Scherenwerkzeug über eine Federeinrichtung, die die Abisolierschnittmesser in eine Ausgangstellung beaufschlagt. Hierbei kann die Ausgangsstellung eine Einlegestellung sein, was zur Folge hat, dass zur Erzeugung von Einschneidkräften der Benutzer Kräfte auf das Betätigungselement aufbringen muss, die entgegengesetzt zur Wirkung der Federeinrichtung orientiert sind, wobei mit der Betätigung des Betätigungselements dann die Beaufschlagung der Federeinrichtung größer wird. Vorzugsweise wird das Abisolierschnittmesser aber über die Federeinrichtung in Richtung einer Einschneidstellung beaufschlagt. Damit erzeugt die Federeinrichtung automatisch die Kraft, mit der das Abisolierschnittmesser auf den Isolationsmantel des Kabels gepresst wird und damit ein Einschneiden des Isolationsmantels erfolgt. Durch die Auslegung der Federsteifigkeit der Federeinrichtung und der Länge derselben kann die Kraftcharakteristik für das Anpressen des Abisolierschnittmessers an den Isolationsmantel konstruktiv vorgegeben werden. Um ein Einlegen des Kabels in den Arbeitsbereich des Abisolierschnittmessers zu ermöglichen, muss dann aber unter Erhöhung der Beaufschlagung der Federeinrichtung das Abisolierschnittmesser von der Einschneidstellung in eine Einlegestellung bewegt werden. Dies kann durch die Betätigung des Betätigungselements durch den Benutzer erfolgen.

Eine weitere Beeinflussungsmöglichkeit für die Anpresscharakteristik des Abisolierschnittmessers an den Isolationsmantel besteht darin, dass die Federeinrichtung vorgespannt sein kann. Auf diese Weise kann beispielsweise je nach Ausmaß der Vorspannung ein Grundniveau der Federkraft der Federeinrichtung in der Einlegestellung vorgegeben werden und andererseits über die Wahl der Federsteifigkeit der Anstieg der Federkraft von diesem Grundniveau in Abhängigkeit von der Bewegung des Abisolierschnittmessers von der Einlegestellung in die Einschneidstellung vorgegeben werden, womit bspw. auch eine Anpassung an unterschiedliche Durchmesser oder Isolationsschichtdicken des abzuisolierenden Kabels und/oder unterschiedliche Materialien des Isolationsmantels, die unterschiedliche Anpressungen des Abisolierschnittmessers erfordern, erfolgen kann.

Im Rahmen der Erfindung wird unter einem "Einschneiden" ein Einschneiden zumindest eines Teilumfangs des Isolationsmantels des Kabels verstanden, ohne das der mit dem Scherenwerkzeug durchgeführte Vorgang zwingend einen Abziehteilhub aufweisen muss, in dem automatisch das mittels des Abisolierschnittmessers eingeschnittene Endstück abgezogen wird.

Für eine Ausführungsform des erfindungsgemäßen Scherenwerkzeuges ragt das Betätigungselement in die Fingeraufnahme des ersten Scherenteils hinein. Vorzugsweise erfolgt eine Begrenzung der maximalen Bewegung des Betätigungselementes (und damit des Abisolierschnittmessers), die mittels des Fingers in der Fingeraufnahme herbeiführbar ist, bei einer Bewegung des Betätigungselements in eine Einlegestellung. In dieser Einlegestellung sind das Betätigungselement und eine Begrenzung der Fingeraufnahme des ersten Scherenteils bündig zueinander angeordnet. Anders gesagt gibt somit das Ausmaß, in welchem das Betätigungselement in die Fingeraufnahme des ersten Scherenteils hineinragt, den maximalen Hub des Betätigungselements bis in die Einlegestellung vor.

Für die Gestaltung der genannten Komponenten können beliebige Materialen und/oder Herstellverfahren Einsatz finden. Die Federeinrichtung kann beispielsweise aus einer oder mehreren metallischen Federn beliebiger Bauart (insbesondere einer Blattfeder, einer Schenkelfeder, einer Spiralfeder in Ausgestaltung als Zug- oder Druckfeder u. ä.) ausgebildet sein. Für einen besonderen Vorschlag der Erfindung sind das Betätigungselement, ein Abisolierschnittmesserhalter und die Federeinrichtung einstückig hergestellt. In diesem Fall ist die Federeinrichtung von einem elastischen Materialbereich ausgebildet. Im Rahmen der Erfindung kann beispielsweise die einstückige Herstellung des Betätigungselements, des Abisolierschnittmesserhalters und der Federeinrichtung aus Kunststoff erfolgen, wobei eine Herstellung in einem Spritzgussverfahren oder einem additiven Verfahren, insbesondere einem 3D-Druck, erfolgen kann. Um lediglich ein Beispiel zu nennen, können das Betätigungselement und ein Abisolierschnittmesserhalter von einem block- oder plattenartigen Einschneidgrundkörper gebildet sein, von dem sich dann einstückig mindestens ein beliebig geformter Federarm erstreckt, der dann die Federeinrichtung bildet. Die Federsteifigkeit der Federeinrichtung ergibt sich in diesem Fall aus dem Elastizitätsmodul des verwendeten Materials und der Geometrie und dem Querschnitt des Federarms, insbesondere der Länge des Federarms und des Flächenträgheitsmoduls des Federarms.

Die Erfindung schlägt für einen weiteren Vorschlag vor, dass (abweichend zu einer klassischen Schere) das erste Scherenteil ein Gehäuse mit einem Innenraum ausbildet. Der Innenraum kann dann dazu genutzt werden, dass hier mindestens eine (insbesondere bewegte) Komponente des Scherenwerkzeugs abgestützt, geführt und/oder angeordnet ist. So kann beispielsweise in dem Innenraum ein Teilabschnitt des Betätigungselements, der Abisolierschnittmesserhalter, die Federeinrichtung und/oder ein Teilbereich des Abisolierschnittmessers abgestützt, geführt und/oder abgeordnet sein. Durch den Innenraum kann sich auch das Scherenlager oder ein Scherenlagerbolzen erstrecken. Des Weiteren können die Trennmesser zumindest teilweise im Bereich des Innenraums angeordnet sein, wobei sich diese dann auch mit dem Schließhub aus dem Innenraum herausbewegen können. Vorzugsweise weist das Gehäuse zwei Gehäuseteile auf, die beispielsweise eine mittige oder außermittige Teilungsebene aufweisen. Möglich ist, dass das Gehäuse einen Gehäusegrundkörper aufweist, der mit einem Gehäusedeckel verschlossen ist.

Für die vorgenannten Ausgestaltungsformen gibt es die folgenden alternativen oder kumulativen weiteren Gestaltungsmöglichkeiten:
- Möglich ist, dass die beiden Gehäuseteile, insbesondere der Gehäusedeckel und der Gehäusegrundkörper, miteinander (auch oder ausschließlich) durch eine Rastverbindung, eine Verriegelung oder ein Verklipsen miteinander verbunden sind. Um lediglich ein Beispiel zu nennen, kann ein Rastvorsprung eines Gehäuseteils verrastet sein mit einem Rastrücksprung des anderen Gehäuseteils. Die Rastwirkung kann dabei beeinflusst werden durch eine Elastizität der Abstützung des Rastvorsprungs und/oder des Rastrücksprunges sowie einen Neigungswinkel und die Gestaltung der Kontaktflächen zwischen dem Rastvorsprung und dem Rastrücksprung.
- Im einfachsten Fall verfügt mindestens ein Gehäuseteil über Rasthaken, die mit korrespondierenden Rastausnehmungen des anderen Gehäuseteils verrastet sind.
- Die vorgenannten Verbindungen kann die einzigen Verbindungen der beiden Gehäuseteile sein. Auch möglich ist, dass eine zusätzliche Verschraubung der Gehäuseteile, ein Verkleben derselben oder eine Verschweißung der Gehäuseteile miteinander erfolgt.
- Möglich ist auch, dass zwischen den Gehäuseteilen eine Abdichtung erfolgt.
- Die Gehäuseteile, insbesondere der Gehäusedeckel und/oder der Gehäusegrundkörper können einen Vorsprung, eine Rippe, eine Vertiefung oder eine Nut aufweisen. Der Vorsprung, die Rippe, die Vertiefung oder die Nut kann dabei eine Führung einer über den Hub des Betätigungselements und/oder den Hub der Trennmesser bewegte Komponente (beispielsweise des Betätigungselements und/oder des Abisolierschnittmesserhalters), gewährleisten. Möglich ist auch, dass der Vorsprung, die Rippe, die Vertiefung oder die Nut einen Anschlag für eine Bewegung einer Komponente (insbesondere des Betätigungselements und/oder des Abisolierschnittmesserhalters) bereitstellt. Um lediglich ein weiteres Beispiel zu nennen, kann der Vorsprung, die Rippe, die Vertiefung oder die Nut zur Abstützung eines Federfußpunktes der Federeinrichtung dienen.
- Möglich ist auch, dass ein Vorsprung, eine Rippe, eine Vertiefung oder eine Nut für die Aufnahme oder Abstützung eines festen Trennmessers dient und/oder ein Abisolierschnittmesser gegenüber einem Austritt aus einer Ausnehmung eines Abisolierschnittmesserhalters entgegen der Montagerichtung sichert.
- Der Vorsprung, die Rippe, die Vertiefung oder Nut kann alternativ oder kumulativ auch eine Kabelanlagefläche bereitstellen, die ein einzuschneidendes und dann abzuisolierendes Kabel auf der dem Abisolierschnittmesser abgewandten Seite abstützt, wobei die Kabelanlagefläche auch eine Abstütz- oder Eingriffsrippe oder -lippe oder ein Abisolierschnittmesser tragen kann.
- Möglich ist, dass der Gehäusedeckel und/oder der Gehäusegrundkörper aus Kunststoff hergestellt sind/ist.

Für eine besondere Ausgestaltung der Erfindung weisen/weist das erste Scherenteil (hier beispielsweise ein Gehäuseteil) und/oder das zweite Scherenteil eine Aufnahme auf. In der Aufnahme kann das zugeordnete Trennmesser angeordnet und abgestützt sein. Dies soll anhand des folgenden, die Erfindung nicht einschränkenden Beispiels erläutert werden: Möglich ist, dass die Aufnahme als Ausnehmung ausgebildet ist, deren Tiefe und Kontur der Dicke und Form des Trennmessers entspricht. Wird das Trennmesser dann in diese Aufnahme eingesetzt, ist das Trennmesser formschlüssig in der Ebene quer zur Einsetzrichtung aufgenommen und abgestützt. Vorzugsweise erfolgt ein Einsetzen des Trennmessers in die Aufnahme in eine Einsetzrichtung, die parallel zu der Scherenschwenkachse orientiert ist. Nach dem Einsetzen kann das Trennmesser bündig zu einer Oberseite des Scherenteils angeordnet sein oder gegenüber dieser nach innen rückversetzt sein oder nach außen hervorstehen.

Für einen weiteren Vorschlag der Erfindung ist in dem Scherenwerkzeug (ausschließlich oder mindestens) eine Schraube vorhanden. Die Schraube gibt dabei die Scherenschwenkachse vor. Hierbei kann der Schaft der Schraube den Scherenlagerbolzen bilden. Alternativ oder kumulativ kann mittels der Schraube je nach Anzugsmoment der Schraube die Anpressung der Scherenteile aneinander vorgegeben werden. Auf diese Weise gibt dann die Schraube die Reibung vor, die einer Verschwenkung der Scherenteile um das Scherenlager entgegenwirkt, sodass über die Schraube die erforderlichen Bedienkräfte und die eine Stellung der Scherenteile sichernde Reibkraft eingestellt werden kann. Alternativ oder kumulativ kann mittels der Schraube ein Schneidenspiel der Trennmesser vorgegeben werden. Somit kann die Schraube multifunktional eingesetzt sein. Möglich ist auch, dass die Schraube neben mindestens einer der genannten Funktionen auch eine Sicherung von Gehäuseteilen oder von Komponenten einer Teilmontageeinheit aneinander gewährleistet.

Ein weiterer Vorschlag der Erfindung widmet sich der Vereinfachung der Montage des Scherenwerkzeuges. Diesbezüglich wird vorgeschlagen, dass (vorzugsweise sämtliche) Komponenten des Scherenwerkzeugs in dieselbe Montagerichtung gefügt sind, wobei diese Montagerichtung parallel zur Scherenschwenkachse orientiert ist. Diese Ausgestaltung ermöglicht eine automatisierte Montage mittels eines Roboters, der für die Montage lediglich ein Fügen der Teile in eine einzige Montagerichtung herbeiführen muss. Eine Handhabung und Verdrehung von Komponenten oder einer Teilmontageeinheit während der Montage erübrigt sich somit in diesem Fall.

Möglich ist, dass in dem Scherenwerkzeug die Schneide des Abisolierschnittmessers einerseits und eine Kabelanlagefläche andererseits, zwischen denen das Kabel eingespannt ist, parallel zueinander orientiert sind. Die Kabelanlagefläche ist dabei fest an dem ersten Zangenteil angeordnet, wobei die Kabelanlagefläche auch eine Schneide oder eine Abstützlippe oder -rippe aufweisen kann. Für einen besonderen Vorschlag der Erfindung ist die Schneide des Abisolierschnittmessers unter einem spitzen Winkel gegenüber der Kabelanlagefläche geneigt, wobei dieser spitze Winkel beispielsweise 1° bis 20°, 2° bis 15° oder 3° bis 10° betragen kann. Eine derartige Neigung der Schneide des Abisolierschnittmessers gegenüber der Kabelanlagefläche hat sich insbesondere dann als vorteilhaft erwiesen, wenn für das Einschneiden des Isolationsmantels über den gesamten Umfang das Kabel gedreht wird, sodass die Schneide den gesamten Umfang des Isolationsmantels einschneiden kann. Unter Umständen ergeben sich sogar je nach Drehrichtung des Kabels gegenüber der Schneide und damit dem Scherenwerkzeug unterschiedliche Einschnitttiefen der Schneide des Abisolierschnittmessers in den Isolationsmantel des Kabels.

Möglich ist, dass Komponenten des Scherenwerkzeugs aus Kunststoff hergestellt sind, wobei es sich auch um einen biogenen Kunststoff, also einen biologisch abbaubaren Kunststoff handeln kann. Bei den Komponenten, welche aus Kunststoff hergestellt sein können, kann es sich beispielsweise um die Gehäuseteile, das Betätigungselement, den Abisolierschnittmesserhalter und die Federeinrichtung sowie einen Einschneidgrundkörper des zweiten Scherenteils handeln. Vorzugsweise sind sämtliche Komponenten bis auf das mindestens eine Abisolierschnittmesser, die Trennmesser und die Schraube aus Kunststoff hergestellt sein, während das Abisolierschnittmesser, die Trennmesser und die Schraube dann aus Metall hergestellt sein können.

Eine weitere Lösung der der Erfindung zugrundeliegenden Aufgabe stellt eine Werkzeuggruppe vor. Die Werkzeuggruppe verfügt über mindestens ein Scherenwerkzeug und mindestens ein Zangenwerkzeug. Das Scherenwerkzeug einerseits und das Zangenwerkzeug andererseits werden für unterschiedliche Anwendungen eingesetzt. Eine derartige Werkzeuggruppe kann beispielsweise von einem Hersteller hergestellt und angeboten werden, wobei dann Kunden nur Scherenwerkzeuge, nur Zangenwerkzeuge oder beide Werkzeuge von diesem Hersteller abnehmen können. Ebenfalls möglich ist, dass eine derartige Werkzeuggruppe bei einem gewerblichen Zwischenhändler auf Lager gehalten und angeboten wird. Möglich ist auch, dass eine derartige Werkzeuggruppe bei dem Verbraucher vorgehalten und eingesetzt wird.

In der erfindungsgemäßen Werkzeuggruppe sind die Scherenwerkzeuge so ausgebildet, wie dies zuvor erläutert worden ist. Die Erfindung schlägt vor, dass das Scherenwerkzeug und das Zangenwerkzeug der Werkzeuggruppe identische Trennmesser aufweisen. In diesem Fall werden dann die Trennmesser des Scherenwerkzeugs über eine Verschwenkung der Scherenteile des Scherenwerkzeugs betätigt, während die Trennmesser des Zangenwerkzeugs über eine Verschwenkung der Zangenhandhebel des Zangenwerkzeugs betätigt werden. Beispielsweise kann das Zangenwerkzeug so ausgebildet sein, wie dies eingangs zu der Druckschrift EP 3 054 542 B1 beschrieben worden ist und ergänzend im Detail in dieser Druckschrift erläutert worden ist. Durch die Ausstattung des Scherenwerkzeug einerseits und des Zangenwerkzeugs andererseits mit identischen Trennmessern kann eine Reduzierung der Herstellkosten infolge der Erhöhung der Gleichteile erfolgen. Da es sich bei den Trennmessern unter Umständen um Verschleißteile handelt, ist für einen Austausch von Trennmessern für das Scherenwerkzeug und das Zangenwerkzeug der Bevorratungsaufwand bei dem Kunden reduziert, da ein- und dasselbe Trennmesser für die beiden unterschiedlichen Werkzeuge vorgehalten werden kann. Das Zangenwerkzeug kann dabei gegenüber dem Scherenwerkzeug einen erweiterten Funktionsumfang bereitstellen. Handelt es sich um ein Zangenwerkzeug gemäß EP 3 054 542 B1, gewährleistet dieses einerseits das Durchtrennen eines Kabels mittels eines Trennmessers sowie die Herbeiführung eines Einschneidteilhubes und eines Abziehteilhubes mittels der Abisolierschnittmesser.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein Scherenwerkzeug in einer rückseitigen Ansicht, wobei sich die Scherenteile und Trennmesser in einer Einlegestellung befinden und sich ein Betätigungselement und ein Abisolierschnittmesser infolge einer manuellen Betätigung in einer Einlegestellung befinden.
- **Fig. 2**: zeigt das Scherenwerkzeug gemäß Fig. 1 bei demontiertem Gehäusedeckel in einer Ansicht von vorne.
- **Fig. 3**: zeigt das Scherenwerkzeug gemäß Figuren 1 und 2 in einer rückseitigen Ansicht, wobei sich die Scherenteile und die Trennmesser in einer Trennstellung befinden und das Betätigungselement und das Abisolierschnittmesser in einer Einschneidstellung befinden.
- **Fig. 4**: zeigt das Scherenwerkzeug gemäß Fig. 3 bei demontiertem Gehäusedeckel in einer Ansicht von vorne.
- **Fig. 5 und 6**: zeigen Explosionsdarstellungen des Scherenwerkzeugs gemäß Figuren 1 bis 4.
- **Fig. 7**: zeigt eine Einzelteilzeichnung eines Gehäusedeckels in einer Ansicht von innen.
- **Fig. 8**: zeigt eine geschnittene Darstellung des Scherenwerkzeugs gemäß Figuren 1 bis 6 bei einer Schnittführung durch den Gehäusedeckel.
- **Fig. 9**: zeigt eine geschnittene Darstellung des Scherenwerkzeugs gemäß Figuren 1 bis 6 bei Schnittführung durch einen Einschneidgrundkörper des zweiten Scherenteils und das Betätigungselement, den Abisolierschnittmesserhalter und die Federeinrichtung.
- **Fig. 10**: zeigt eine räumliche Darstellung des Gehäusegrundkörpers mit daran ausgebildeten Rippen, Ausnehmungen und Rasthaken.
- **Fig. 11**: zeigt in einer Vorderansicht ein Zangenwerkzeug.
- **Fig. 12**: zeigt das Zangenwerkzeug gemäß Fig. 11 in einer Explosionsdarstellung.

### FIGURENBESCHREIBUNG

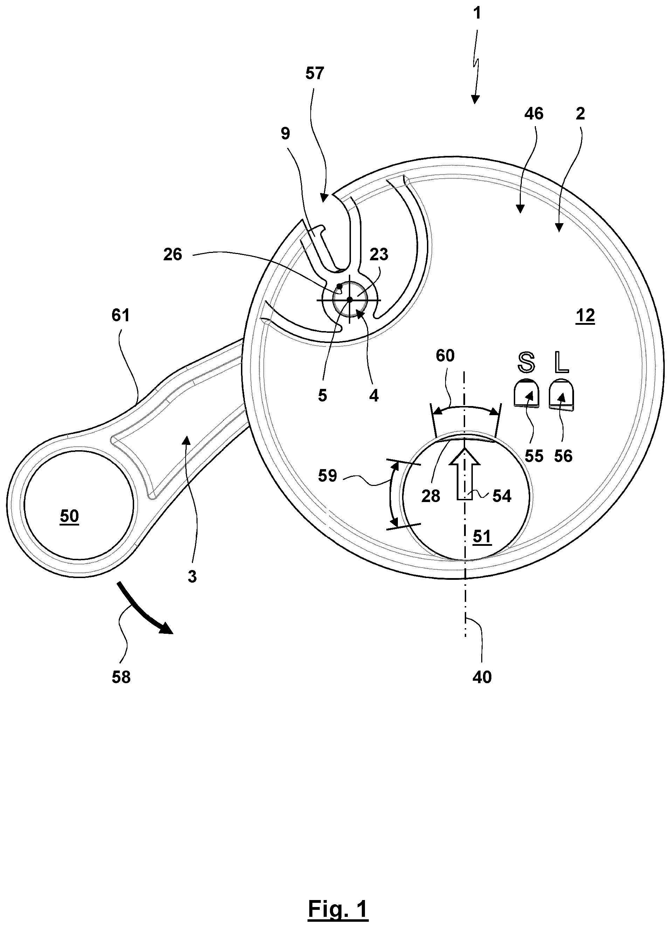

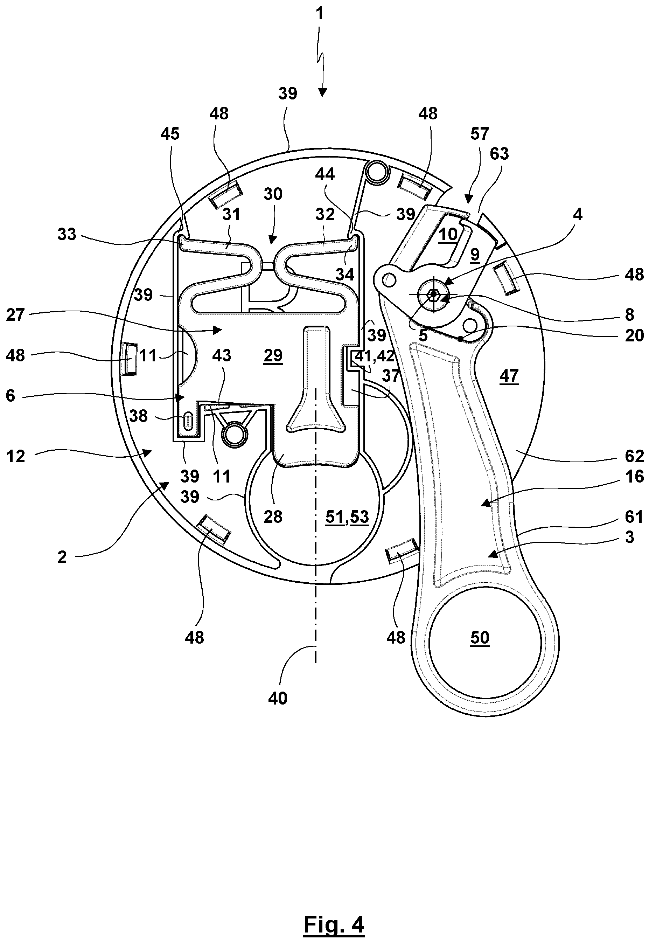

Die Figuren zeigen ein Scherenwerkzeug 1. Das Scherenwerkzeug 1 verfügt über drei in Betrieb relativ zueinander bewegbare Komponenten oder Baugruppen, nämlich
- ein erstes Scherenteil 2, ein zweites Scherenteil 3, die über ein Schwenklager 4 verschwenkbar um eine vertikal zur Zeichenebene gemäß **Fig. 1 bis 4** orientierte Scherenschwenkachse gelagert und in einem Trennhub relativ zueinander verschwenkbar sind, sowie
- eine Einschneideeinheit 6, welche in einem Einschneidhub relativ zu dem ersten Scherenteil 2 bewegbar ist.

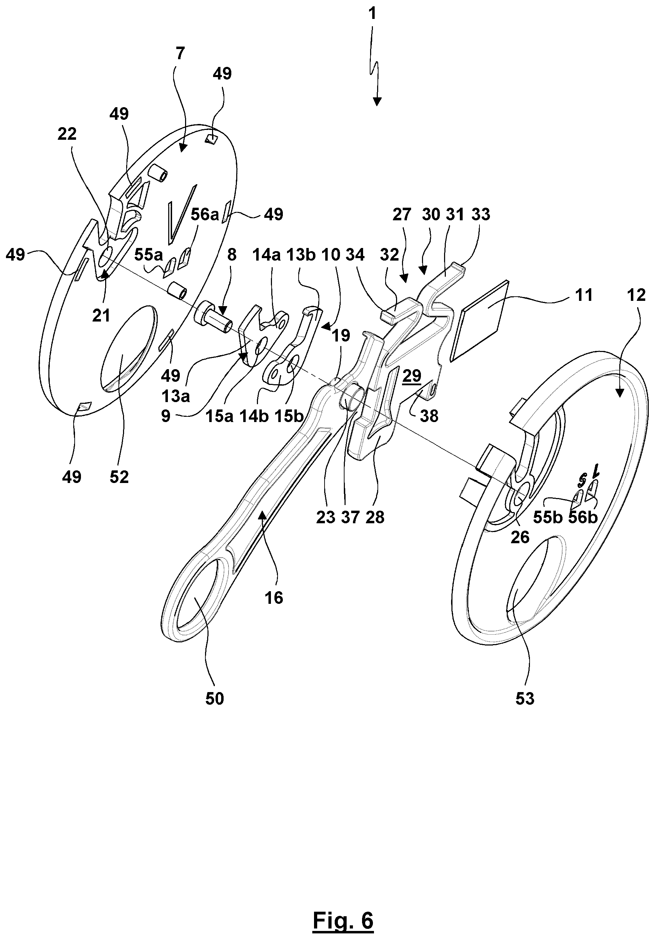

In den Explosionsdarstellungen gemäß **Fig. 6** ist zu erkennen, dass das Scherenwerkzeug 1 ausschließlich über folgende Komponenten verfügt:
- einen Gehäusedeckel 7,
- eine Schraube 8,
- zwei Trennmesser 9, 10,
- die Einschneideeinheit 6, die hier einstückig ausgebildet ist,
- ein Abisolierschnittmesser 11 und
- einen Gehäusegrundkörper 12.

Die Trennmesser 9, 10 sind L-förmig ausgebildet mit zwei abgewinkelten Schenkeln 13, 14, wobei in den Figuren die Schenkel 13, 14 des Trennmessers 9 mit dem Zusatz "a" gekennzeichnet sind, während die Schenkel 13, 14 des Trennmessers 10 mit dem Zusatz "b" gekennzeichnet sind (s. Fig. 6). Im Übergangsbereich der Schenkel 13, 14 befindet sich eine Bohrung 15, die ebenfalls mit dem Zusatz "a" bzw. "b" gekennzeichnet ist.

Das erste Scherenteil 2 verfügt über einen hebelartigen Grundkörper 16, der Hebelteile 17, 18 aufweist. Im Übergangsbereich der Hebelteile 17, 18 ist ein zylindrischer Fortsatz 19 angeordnet. Der Durchmesser des Fortsatzes 19 entspricht (mit einer Passung oder einem Spiel) dem Durchmesser der Bohrungen 15 der Trennmesser 9, 10, sodass die Trennmesser 9, 10 auf den Fortsatz 19 aufgesetzt werden können.

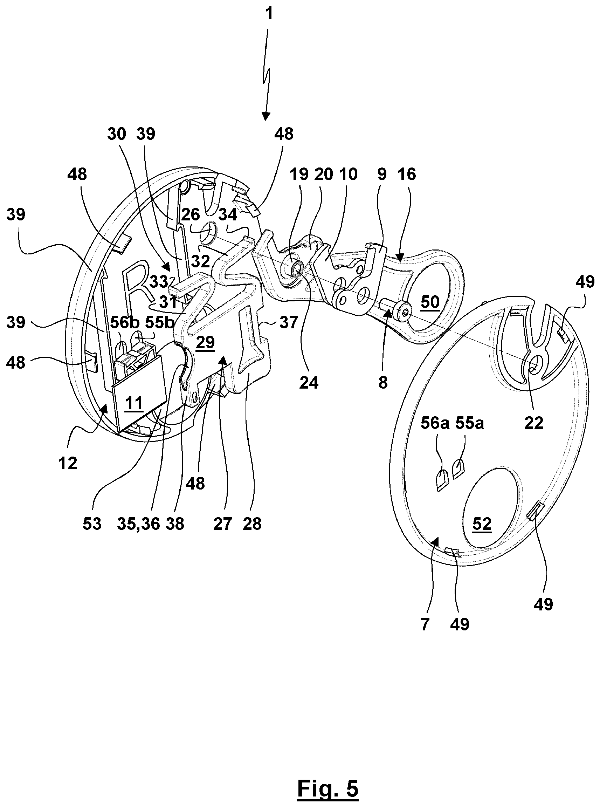

Der Fortsatz 19 ist umgeben von einer Aufnahme 20 (s. Fig. 5). Die Tiefe der Aufnahme 20 entspricht vorzugsweise der Dicke des Trennmessers 10. Des Weiteren entspricht die Außenkontur der Aufnahme 20 der Außenkontur des Trennmessers 10. Somit kann mit dem Aufsetzen des Trennmessers 10 auf den Fortsatz 19 das Trennmesser 10 in die Aufnahme 20 eingesetzt werden, womit dieses formschlüssig in der Aufnahme 20 aufgenommen ist. Das Hebelteil 17 stützt dabei den die Schneide des Trennmessers 10 ausbildenden Schenkel 13a sowohl in Umfangsrichtung um die Scherenschwenkachse 5 als auch in Abstützrichtung an dem Boden der Aufnahme 20 ab.

Sind die Trennmesser 9, 10 auf den Fortsatz 19 aufgesetzt, werden diese über die Schraube 8 an dem Grundkörper 16 gehalten, wobei die Trennmesser 9, 10 zwischen dem Kopf der Schraube 8 und dem Grundkörper 16 gefangen sind. Ein Schaft der Schraube 8 erstreckt sich dabei durch die Bohrungen 15a, 15b der Trennmesser 9, 10. In dem dem Kopf der Schraube 8 abgewandten Endbereich, der aus den Trennmessern 9, 10 heraussteht, ist das Gewinde der Schraube 8 verschraubt mit einer Bohrung 24 des Fortsatzes 19. Ist der Fortsatz 19 aus Kunststoff hergestellt, kann die Schraube 8 selbstschneidend in die zylindrische Bohrung 24 des Zapfens 19 eingeschraubt werden. Das Anzugsmoment der Schraube 8 gibt dabei einerseits ein Schneidenspiel der Trennmesser 9, 10 vor und bestimmt andererseits die Reibung zwischen den Trennmessern 9, 10 bei der Bewegung der Scherenteile 2, 3. Mit dem Einschrauben der Schraube 8 bildet der Grundkörper 16 mit den Trennmessern 9, 10 eine Montageeinheit. Diese Montageeinheit wird verschwenkbar mit dem Gehäusedeckel 7 verbunden, indem der Kopf der Schraube 8 passgenaue Aufnahme findet in einer Bohrung 22 des Gehäusedeckels 7.

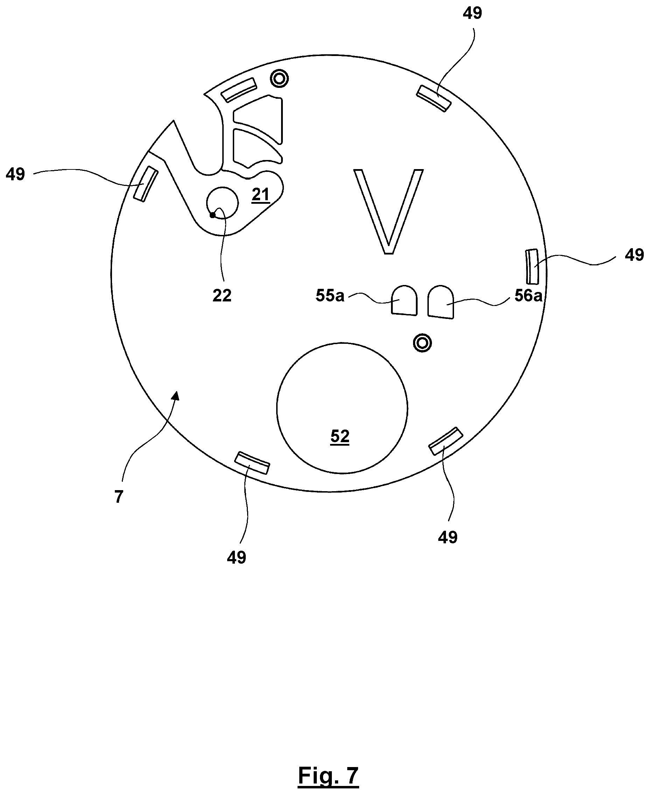

Wie in **Fig. 6** **und** **7** zu erkennen ist, verfügt der Gehäusedeckel 7 über eine Aufnahme 21, deren Tiefe der Dicke des Trennmessers 9 entspricht und deren Außenkontur der Außenkontur des Trennmessers 9 angepasst ist. Mit dem Einsetzen findet das Trennmesser 9 formschlüssige Aufnahme in der Aufnahme 21. Infolge der formschlüssigen Aufnahme des Trennmessers 10 in der Aufnahme 20 des Grundkörpers 16 sowie des Trennmessers 9 in der Aufnahme 21 des Gehäusedeckels 7 führt eine relative Verschwenkung des ersten Scherenteils 2 und des zweiten Scherenteils 3 zu einer relativen Verschwenkung der Trennmesser 9, 10, womit die Trennmesser 9, 10 von einer Einlegestellung in eine Trennstellung (und umgekehrt) überführt werden können.

Der Grundkörper 16 verfügt auch auf der dem Gehäusegrundkörper 12 zugewandten Seite über einen Fortsatz 23, der (mit einem Spiel oder einer Passung) Aufnahme findet in einer Bohrung 26 des Gehäusegrundkörpers 12.

Die Einschneideeinheit 6 verfügt über einen einstückig aus Kunststoff hergestellten Einschneidgrundkörper 27. Der Einschneidgrundkörper 27 verfügt über ein zungenartiges Betätigungselement 28, einen Abisolierschnittmesserhalter 29 und eine Federeinrichtung 30, die hier zwei Federarme 31, 32 aufweist. Die Federarme 31, 32 sind jeweils schwanenhalsförmig, V-, U- oder Z-förmig ausgebildet und ermöglichen eine Einfederung infolge ihrer inhärenten Elastizität, wobei die Federarme 31, 32 auf Biegung beansprucht werden. Die Federarme 31, 32 verfügen in dem dem Abisolierschnittmesserhalter 29 abgewandten Endbereich jeweils über einen Vorsprung 33, 34 oder hakenförmigen Endbereich.

Der Abisolierschnittmesserhalter 29 verfügt über einen Innenraum 35, in den über eine seitliche Montageöffnung 36 das Abisolierschnittmesser 11 eingesetzt werden kann. Auf der der Montageöffnung 36 gegenüberliegenden Seite bildet der Abisolierschnittmesserhalter 29 eine Anschlagausnehmung 37 aus. Des Weiteren erstreckt sich von dem Abisolierschnittmesserhalter 29 parallel zu einer Betätigungsachse 40 des Betätigungselements 28 ein Fortsatz 38.

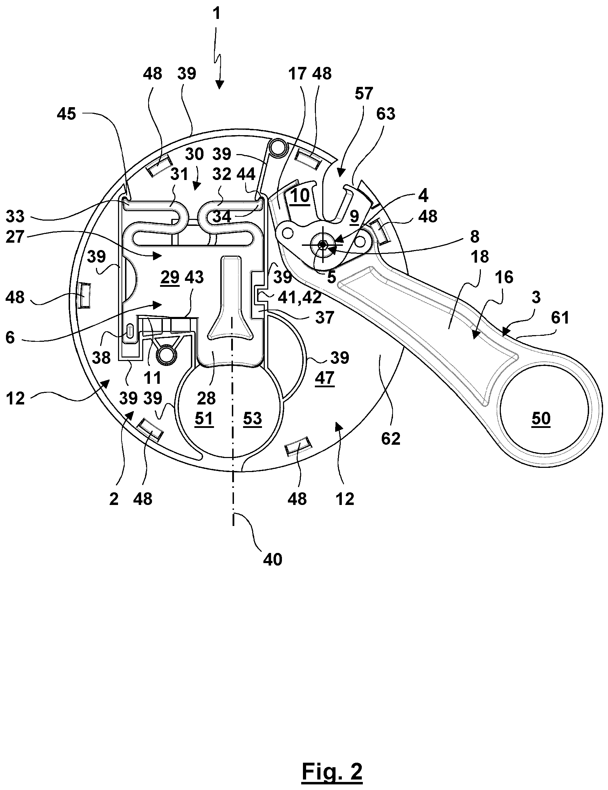

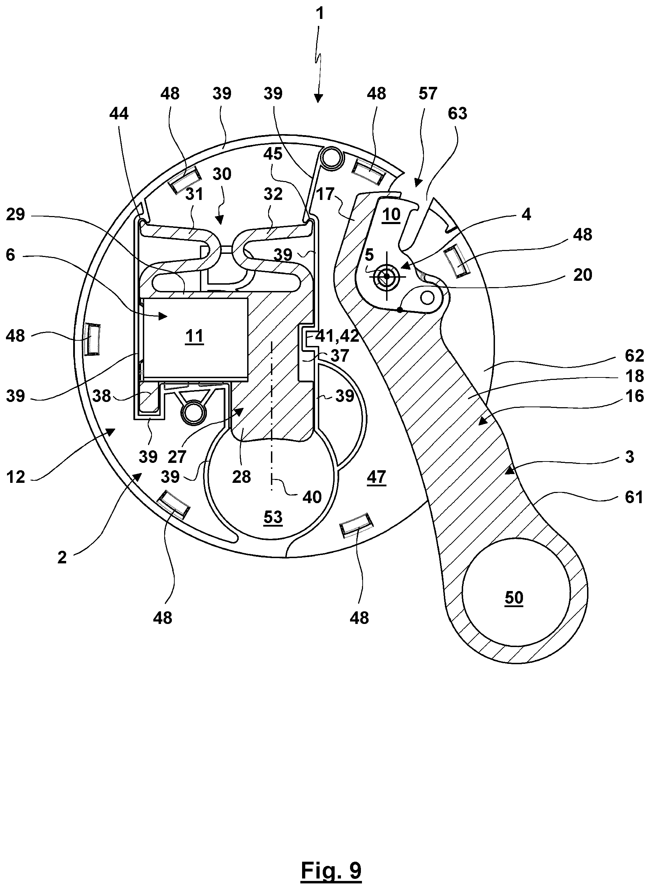

Wie insbesondere in **Fig. 2****,** **4****,** **5** **und** **9** zu erkennen ist, bildet der Gehäusegrundkörper 12 Rippen 39 aus, deren Höhe ungefähr der Dicke des Einschneidgrundkörpers 27 entspricht. Die Rippen 39 sind dabei parallel zu der Betätigungsachse 40 des Betätigungselements 28 orientiert. An den Rippen 39 sind die Seitenflächen des Einschneidgrundkörpers 27 gleitend geführt, sodass sich der Einschneidgrundkörper 27 und damit das Betätigungselement 28 und das Abisolierschnittmesser 11 ausschließlich in Richtung der Betätigungsachse 40 bewegen können. Des Weiteren bilden die Rippen 39 eine Aufnahme aus, in welcher der Fortsatz 38 des Einschneidgrundkörpers 27 geführt ist. Möglich ist, dass die Stirnseite des Fortsatzes 38 infolge einer Vorspannung der Federeinrichtung 30 gegen einen von der Rippe 39 gebildeten Anschlag gepresst wird, womit die Endstellung der Bewegung des Abisolierschnittmessers 11 und des Betätigungselements 28 vorgegeben ist. Des Weiteren kann die Rippe 39 einen Fortsatz 41 ausbilden, der einen Anschlag 42 bildet, der zur Begrenzung des Hubes des Einschneidgrundkörpers 27 zur Anlage kommt an die Begrenzungen der Ausschlagausnehmung 37.

Eine Rippe 39 oder ein Fortsatz bildet des Weiteren eine Kabelanlagefläche 43 aus, auf die in der Einlegestellung der Einschneideeinheit 6 das Kabel aufgelegt werden kann, wobei infolge der Federkraft der Federeinrichtung 30 das Kabel zwischen der Kabelanlagefläche 43 und der Schneide des Abisolierschnittmessers 41 eingespannt wird.

Die Rippen 39 können Aufnahmevertiefungen 44, 45 ausbilden, in denen die Vorsprünge 33, 34 der Federarme 31, 32 Aufnahme finden können zur Sicherung der Federfußpunkte der Federarme 31, 32 an dem Gehäusegrundkörper 12.

Eine Montage des Scherenwerkzeugs 1 erfolgt wie folgt:
Zunächst wird das Trennmesser 10 auf den Fortsatz 19 des Grundkörpers 16 aufgesetzt und in die Aufnahme 20 des Grundkörpers 16 eingesetzt.

Hieran anschließend wird das Trennmesser 9 auf den Fortsatz 19 des Grundkörpers 16 aufgesetzt.

Schließlich wird die Schraube 8 durch die Bohrungen 15a, 15b gesteckt und mit der Bohrung 24 des Fortsatzes 19 verschraubt.

Hieran anschließend wird die derart gebildete Montageeinheit mit dem Fortsatz 23 in die Bohrung 26 des Gehäusegrundkörpers 12 eingesetzt.

Parallel kann eine weitere Teilmontageeinheit gebildet werden, indem das Abisolierschnittmesser 11 über die Montageöffnung 36 in den Innenraum 35 des Abisolierschnittmesserhalters 19 eingesetzt wird.

Diese Teilmontageeinheit kann dann in den Gehäusegrundkörper 12 eingesetzt werden, indem die freien Federfußpunkte der Federarme 31, 32 an den Rippen 39 abgestützt werden, was hier erfolgt durch Einsetzen der Vorsprünge 33, 34 in die Aufnahmevertiefungen 44, 45. Gleichzeitig erfolgt ein Einsetzen des Abschnittes des Abisolierschnittmesserhalters 29 zwischen die parallelen führenden Rippen 39, womit gleichzeitig der Anschlag 42 in die Anschlagausnehmung 37 eintritt und der Fortsatz 38 führende Aufnahme zwischen parallelen Abschnitten der Rippen findet. Auch das Betätigungselement 28 findet führende Aufnahme zwischen zwei parallelen Abschnitten der Rippen 39. Ist der Abisolierschnittmesserhalter 29 derart zwischen die Rippen 39 eingesetzt, kann das Abisolierschnittmesser 11 nicht aus der Montageöffnung 36 austreten, da diese in Demontagerichtung durch die Rippe 39 verschlossen ist.

Im nächsten Schritt kann dann der Gehäusedeckel 7 auf den Gehäusegrundkörper 12 aufgesetzt werden, womit ein geschlossenes Gehäuse 46 gebildet ist, in dessen Innenraum 47 der Grundkörper 16 mit den Trennmessern 9, 10 und der Einschneidgrundkörper 27 mit der Federeinrichtung 30, dem Abisolierschnittmesserhalter 29 und dem Betätigungselement 28 sowie dem Abisolierschnittmesser 11 angeordnet ist. Eine Verbindung zwischen dem Gehäusedeckel 7 und dem Gehäusegrundkörper 12 erfolgt über über den Umfang verteilt angeordnete elastische Rasthaken 48 des Gehäusegrundkörpers 12, die verrastet werden in Rastausnehmungen 49 des Gehäusedeckels 7. Vorzugsweise sind zwei Rasthaken 48 und Rastausnehmungen 49 unmittelbar benachbart einem von den Trennmessern 9, 10 ausgebildeten Trennmessermaules 57, in welches das Kabel zum Durchtrennen eingeführt werden kann, angeordnet.

Die Montagerichtung für die vorgenannten Montageschritte ist grundsätzlich parallel zur Scherenschwenkachse 5 orientiert. Das Einsetzen des Abisolierschnittmessers 11 in den Abisolierschnittmesserhalter 29 erfolgt vertikal zur Betätigungsachse 40.

Das Hebelteil 18 des Grundkörpers 16 bildet in dem außenliegenden Endbereich eine Fingeraufnahme 50 aus, die hier als kreisförmige Bohrung ausgebildet ist. Auch das Gehäuse 46 bildet eine Fingeraufnahme 51 aus. Zu diesem Zweck verfügen der Gehäusedeckel 7 und der Gehäusegrundkörper 12 über fluchtende Durchgangsbohrungen 52, 53.

In einer Einlegestellung des Abisolierschnittmessers 11 gemäß Fig. 1, bei welcher das Betätigungselement 28 in der Fingeraufnahme 51 stirnseitig mit einer Fingerkraft 54 beaufschlagt ist, ist das Betätigungselement 28 und damit auch der Abisolierschnittmesserhalter 29 mit dem Abisolierschnittmesser 11 unter Beaufschlagung der Federeinrichtung 30 in den Innenraum 47 des Gehäuses 46 gedrückt, wobei vorzugsweise die Stirnseite bündig mit der Fingeraufnahme 51 ausgebildet ist.

Der Gehäusedeckel 7 und der Gehäusegrundkörper 12 verfügen über fluchtende Einlegeöffnungen 55a, 55b, 56a, 56b, wobei für das dargestellte Ausführungsbeispiel jeweils ein Paar fluchtender Einlegeöffnungen 55a, 55b sowie 56a, 56b vorhanden ist.

Über die Einlegeöffnungen 55, 56 ist in der Einlegestellung der Zwischenraum zwischen der Kabelanlagefläche 43 und der Schneidkante des Abisolierschnittmessers 11 zugänglich, sodass ein Kabel eingelegt werden kann, welches je nach Länge des zu entfernenden Endstücks des Isolationsmantels auch mit einem freien Endbereich aus dem Gehäuse 46 herausstehen kann. Sind die Kabelanlagefläche 43 und die Schneidkante des Abisolierschnittmessers 11 unter einem spitzen Winkel zueinander geneigt, können die Paare der Einlegeöffnungen 55a, 55b und 56a, 56b genutzt werden für eine Erzeugung der Einschnitte in Kabel mit unterschiedlichen Durchmessern oder unterschiedlicher Härten des Isolationsmantels.

Eine Benutzung des Scherenwerkzeugs 1 kann wie folgt erfolgen:
Befinden sich die Scherenteile 2, 3 in der Öffnungsstellung gemäß Fig. 1, kann ein Kabel in das zwischen den Trennmessern 9, 10 gebildete Trennmessermaul 57 eingelegt werden. Erfolgt eine Verschwenkung des zweiten Scherenteils 3 in eine Schließrichtung 58, werden die Trennmesser 9, 10 aufeinander zu bewegt und geschlossen, womit ein Durchtrennen des Kabels erfolgt. Während der Erzeugung der Schließbewegung befinden sich zwei Finger, insbesondere ein Daumen und ein Zeigefinder oder ein Mittelfinger, in den Fingeraufnahmen 50, 51. Der in der Fingeraufnahme 51 angeordnete Finger erzeugt dann eine Schließkraft in einem ersten Umfangsbereich 59 der Fingeraufnahme 51, dessen Flächennormale ungefähr vertikal zu der Verbindungsachse mit der Schwenkachse 5 oder in Umfangsrichtung der Schwenkachse 5 orientiert ist.

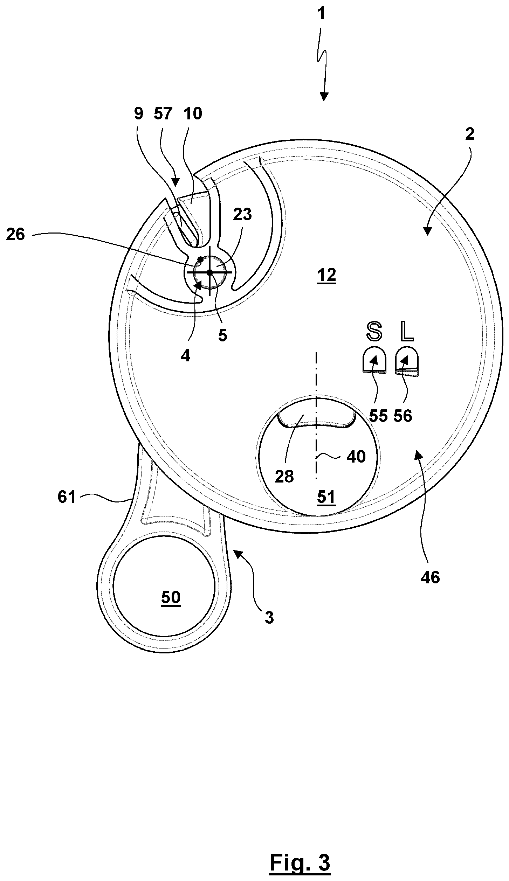

Soll hingegen ein Einschneiden des Kabels durch Erzeugen der Einschnitte in den Isolationsmantel erfolgen, wird von dem Benutzer ein Finger, insbesondere der Daumen, in die Fingeraufnahme 51 eingesteckt, während die restliche Hand das Gehäuse 46 umgreift. Mit dem in der Fingeraufnahme 51 angeordneten Finger kann dann die Fingerkraft 54 auf das Betätigungselement 28 aufgebracht werden, womit der Abisolierschnittmesserhalter 29 und das darin angeordnete Abisolierschnittmesser 11 von der Einschneidstellung gemäß Fig. 3 in die Einlegestellung gemäß Fig. 1 überführt wird. Es ist dann möglich, den Endbereich des Kabels in die jeweilige Einlegeöffnung 55, 56 einlegen. Wird dann die Fingerkraft 54 beseitigt, presst die Federeinrichtung 30 den Abisolierschnittmesserhalter 29 mit dem Abisolierschnittmesser 11 gegen die Mantelfläche des Kabels, die auf der gegenüberliegenden Seite an der Kabelanlagefläche 43 abgestützt ist, womit das Einbringen eines Teilumfangseinschnittes in den Isolationsmantel erfolgt. Soll nicht nur ein Teilumfangsbereich des Isolationsmantels eingeschnitten werden, kann der Benutzer auch eine relative Drehbewegung zwischen dem Kabel und dem Gehäuse 46 erzeugen, womit die Schneidkante des Abisolierschnittmessers 11 entlang des Umfangs des Isolationsmantels bewegt wird. Möglich ist auch, dass eine Verdrehung um mehr als 360° erfolgt, wenn sukzessive die Schnitttiefe des Abisolierschnittmessers 11 erhöht werden soll. Ohne dass dies zwingend der Fall ist, kann am Ende des Einschneidens auch eine Relativbewegung des Scherenwerkzeugs 1 gegenüber dem Kabel in Richtung der Längsachse des Kabels erfolgen, womit dann das zuvor abgetrennte Endstück des Isolationsmantels mittels des Abisolierschnittmessers 11 abgestreift werden kann. Sofern der Isolationsmantel zuvor nicht entlang des gesamten Umfangs eingeschnitten worden ist, kann ein Abreißen in dem verbleibenden Restumfangsbereich erfolgen.

In der Fingeraufnahme 51 ist die zu betätigende Stirnseite des Betätigungselements 28 in einem zweiten Umfangsbereich 60 angeordnet. Der erste Umfangsbereich 59 und der zweite Umfangsbereich 60 sind versetzt zueinander angeordnet. Möglich ist beispielsweise, dass die Flächennormale des zweiten Umfangsbereichs 60 in Richtung der Verbindungachse mit der Scherenschwenkachse 5 oder unter einem Winkel von +/- 30° hierzu geneigt ist.

Möglich ist, dass die Trennmesser 9, 10 in der Trennstellung mit ihren Schneiden aneinander anliegen (oder einen minimalen Spalt ausbilden). Möglich ist aber auch, dass die Trennmesser 9, 10 in einer Endstellung überlappend angeordnet sind, sodass die Schneiden der Trennmesser 9, 10 mit dem Schließen aneinander vorbeigeführt werden und ein sogenannter Bypassschnitt erzeugt wird. Vorzugsweise sind die Trennmesser 9, 10 als Gleichteile ausgebildet.

Möglich ist auch, dass die Kabelanlagefläche 43 ebenfalls ein Abisolierschnittmesser oder eine Kunststofflippe oder -rippe aufweist. Mittels einer Kunststofflippe oder -rippe kann beim Drehen des Kabels gegenüber dem Scherenwerkzeug 1 eine zusätzliche Führung gewährleistet werden, indem diese Kunststofflippe oder -rippe eintritt in einen zuvor eingeschnittenen Bereich des Isolationsmantels.

Möglich ist, dass der Grundkörper 16 benachbart der Fingeraufnahme 50 eine Fingermulde 61 aufweist, an welcher ein weiterer Finger des Benutzers abgestützt werden kann. Möglich ist beispielsweise, dass dann für die Betätigung der Trennmesser 9, 10 der Daumen in der Fingeraufnahme 50 angeordnet ist, der Zeigefinger an der Fingermulde 61 abgestützt ist und der Mittelfinger in der Fingeraufnahme 51 angeordnet ist.

Möglich ist, dass der Deckel auch im Bereich der Bohrung 22 geschlossen ist. Möglich ist auch, dass ein Verschrauben der Schraube 8 durch die Bohrung 22 des Gehäusedeckels 7 hindurch erfolgt, wenn bereits das Schließen des Gehäusedeckels 46 erfolgt ist.

Möglich ist auch, dass durch den Fortsatz 38 und dessen Wechselwirkung mit den Rippen 39 ein Eintritt von abgeschnittenen Resten des Isolationsmantels in den Innenraum 47 des Gehäuses 46 vermieden werden kann.

Für das dargestellte Ausführungsbeispiel erfolgt eine nicht mittige Teilung des Gehäuses 46. In diesem Fall sind die Rippen 39 ausschließlich oder vorrangig an dem Gehäusegrundkörper 12 ausgebildet, während der Gehäusedeckel 7 keinerlei Rippen aufweist. Es ist aber auch eine beliebige andere Teilung des Gehäuses 46 möglich.

Der Grundkörper 16 des zweiten Scherenteils 3 tritt über eine Scherenteilöffnung 62 des Gehäuses 46 in den Innenraum 47 ein. Der Grundkörper 16 erstreckt sich dann durch den Innenraum 47 und der Grundkörper 16 und/oder das zugeordnete Trennmesser 10 tritt dann über eine Trennmesseröffnung 63 aus dem Innenraum 47 im Bereich des Trennmessermauls 57 aus.

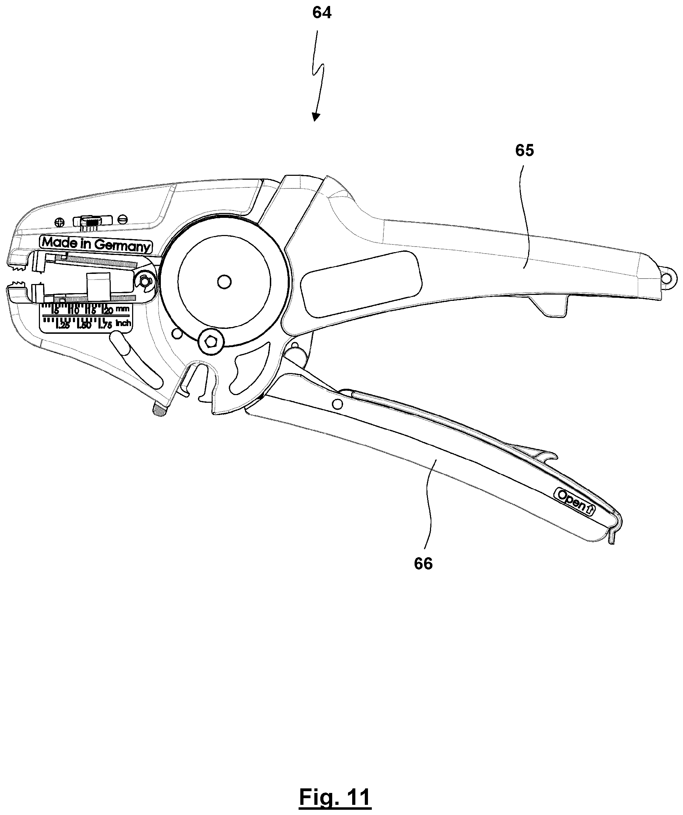

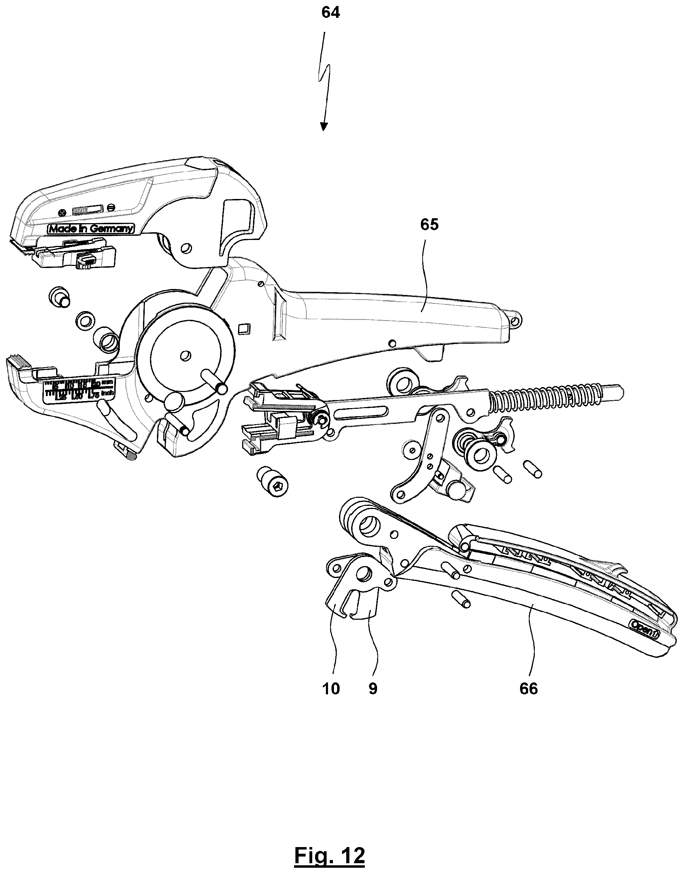

**Fig. 11** **und** **12** zeigen ein Zangenwerkzeug 64. Über Zangenhandhebel 65, 66 kann einerseits eine Trennbewegung von Trennmessern 9, 10 des Zangenwerkzeugs 64 herbeigeführt werden. Darüber hinaus kann auch der Hub der Zangenhandhebel 65, 66 genutzt werden, um in einem Einschneidteilhub Abisolierschnittmesser zum Einschneiden gegen einen Isolationsmantel zu pressen und in einem anschließenden Abziehteilhub das abgeschnittene Endstück durch Bewegung eines Schlittens, an dem die Abisolierschnittmesser gehalten sind, abzuziehen. Hinsichtlich weiterer Gestaltungsmerkmale und Funktionen des Zangenwerkzeugs 64 wird auf die Druckschrift EP 3 054 542 B1 verwiesen, deren diesbezüglicher Inhalt zum Gegenstand der vorliegenden Erfindung gemacht wird. Für das Scherenwerkzeug 1 einerseits und das Zangenwerkzeug 64 andererseits finden vorzugsweise gleiche Paare von Trennmessern 9, 10 Einsatz, wobei (wie bereits zuvor erläutert) in den Paaren der Trennmesser 9, 10 auch identische Trennmesser verwendet sein können.

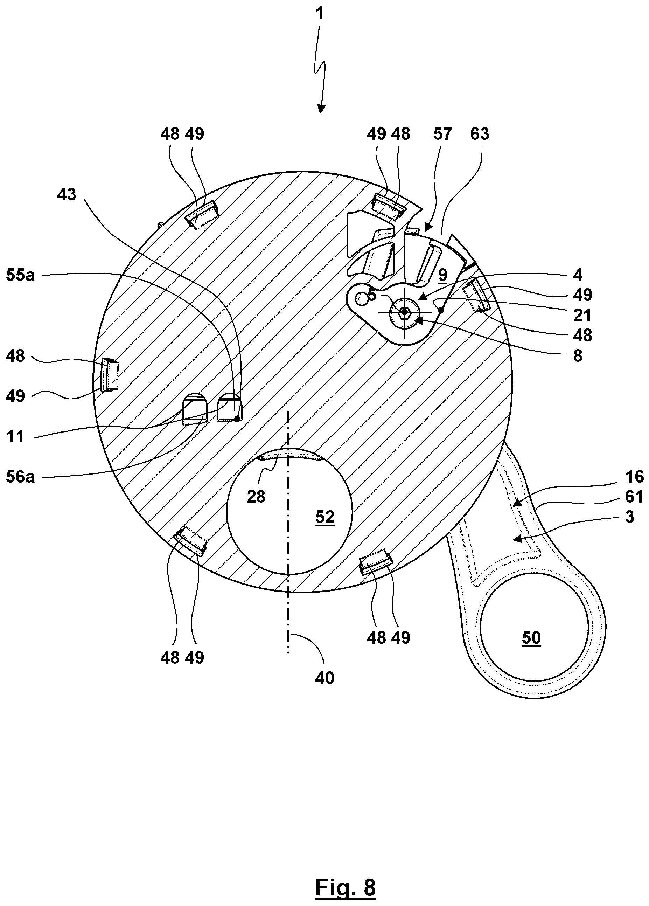

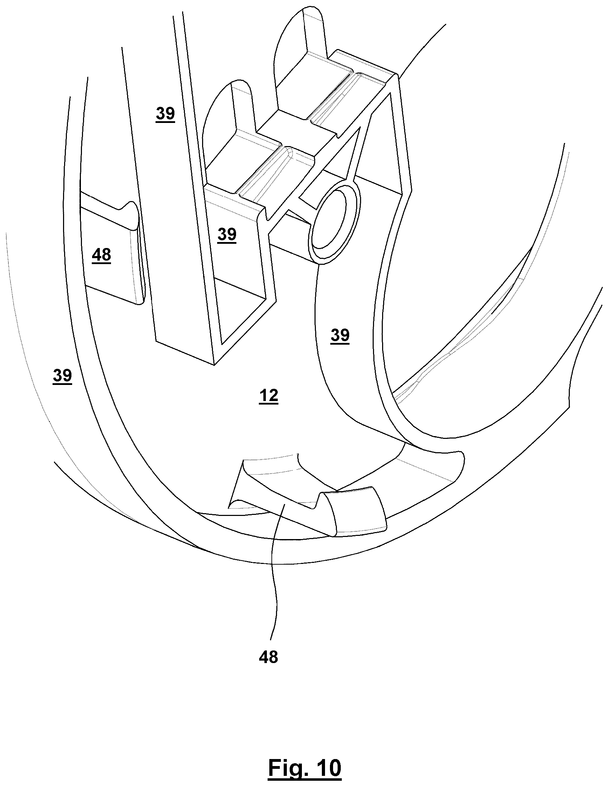

Möglich ist, dass mit dem Scherenwerkzeug 1 gemäß Fig. 1 bis 10 nach dem Einschneiden des Isolationsmantels unmittelbar mit dem Abisolierschnittmesser 11 das ein- oder abgeschnittene Endstück des Isolationsmantels abgezogen wird. Ebenfalls möglich ist aber, dass das ein- oder abgeschnittene Endstück des Isolationsmantels in seiner Ursprungsposition auf dem Leiter verbleibt oder nur teilweise abgezogen (und u. U. damit abgerissen) wird, womit das Endstück den Leiter schützen kann, bspw. gegen ein Aufspleißen von Litzen eines Kabels. Das Abziehen des Endstückes kann dann erst später erfolgen, wenn eine Verbindung eines Anschlussteils mit dem von dem Endstück befreiten Ende des Leiters erfolgen soll.

### BEZUGSZEICHENLISTE

- 1: Scherenwerkzeug
- 2: erstes Scherenteil
- 3: zweites Scherenteil
- 4: Scherenlager
- 5: Scherenschwenkachse
- 6: Einschneideeinheit
- 7: Gehäusedeckel
- 8: Schraube
- 9: Trennmesser
- 10: Trennmesser
- 11: Abisolierschnittmesser
- 12: Gehäusegrundkörper
- 13: Schenkel
- 14: Schenkel
- 15: Bohrung
- 16: Grundkörper
- 17: Hebelteil
- 18: Hebelteil
- 19: Fortsatz
- 20: Aufnahme
- 21: Aufnahme
- 22: Bohrung
- 23: Fortsatz
- 24: Bohrung
- 26: Bohrung
- 27: Einschneidgrundkörper
- 28: Betätigungselement
- 29: Abisolierschnittmesserhalter
- 30: Federeinrichtung
- 31: Federarm
- 32: Federarm
- 33: Vorsprung
- 34: Vorsprung
- 35: Innenraum
- 36: Montageöffnung
- 37: Anschlagausnehmung
- 38: Fortsatz
- 39: Rippe
- 40: Betätigungsachse
- 41: Fortsatz
- 42: Anschlag
- 43: Kabelanlagefläche
- 44: Aufnahmevertiefung
- 45: Aufnahmevertiefung
- 46: Gehäuse
- 47: Innenraum
- 48: Rasthaken
- 49: Rastausnehmung
- 50: Fingeraufnahme
- 51: Fingeraufnahme
- 52: Durchgangsbohrung
- 53: Durchgangsbohrung
- 54: Fingerkraft
- 55: Einlegeöffnung
- 56: Einlegeöffnung
- 57: Trennmessermaul
- 58: Schließrichtung
- 59: erster Umfangsbereich
- 60: zweiter Umfangsbereich
- 61: Fingermulde
- 62: Scherenteilöffnung
- 63: Trennmesseröffnung
- 64: Zangenwerkzeug
- 65: Zangenhandhebel
- 66: Zangenhandhebel

## Patentansprüche

1. Scherenwerkzeug (1) mit einem ersten Scherenteil (2) und einem zweiten Scherenteil (3), die
a) über ein Scherenlager (4) verschwenkbar um eine Scherenschwenkachse (5) aneinander gelagert sind,
b) jeweils eine Fingeraufnahme (50, 51) aufweisen, über die die Verschwenkung der Scherenteile (2, 3) in eine Schließrichtung (58) herbeiführbar ist, und
c) jeweils ein Trennmesser (9, 10) aufweisen, welche mit der Verschwenkung der Scherenteile (2, 3) in die Schließrichtung (58) aufeinander zu bewegt werden,
d) wobei ein Abisolierschnittmesser (11) vorhanden ist und
e) das Abisolierschnittmesser (11) beweglich an dem ersten Scherenteil (2) geführt ist, **dadurch gekennzeichnet, dass**
f) in die Fingeraufnahme (51) des ersten Scherenteils (2) ein Betätigungselement (28) für das Abisolierschnittmesser (11) integriert ist, wobei das Betätigungselement (28) über eine Antriebsverbindung mit dem Abisolierschnittmesser (11) verbunden ist, wobei die Antriebsverbindung vorzugsweise eine starre Verbindung ist.

2. Scherenwerkzeug (1) nach Anspruch 1, **wobei** das Abisolierschnittmesser (11) über eine Federeinrichtung (30) in Richtung einer Einschneidstellung beaufschlagt ist und das Abisolierschnittmesser (11) durch eine Betätigung des Betätigungselements (28) entgegen der Beaufschlagung durch die Federeinrichtung (30) von der Einschneidstellung in eine Einlegestellung bewegbar ist, wobei vorzugsweise die Federeinrichtung (30) in der Einschneidstellung ohne auf das Betätigungselement (28) wirkende Fingerkraft (54) vorgespannt ist.

3. Scherenwerkzeug (28) nach Anspruch 1 oder 2, **wobei** das Betätigungselement (28) in die Fingeraufnahme (51) des ersten Scherenteils (2) hineinragt, wobei vorzugsweise die maximale Bewegung des Betätigungselements (28) und des Abisolierschnittmessers (11) begrenzt sind durch die Bewegung des Betätigungselements (28) in eine Einlegestellung, in welcher das Betätigungselement (28) und eine Begrenzung der Fingeraufnahme (51) des ersten Scherenteils (2) bündig zueinander angeordnet sind.

4. Scherenwerkzeug (1) nach einem der vorhergehenden Ansprüche, **wobei** das Betätigungselement (28), ein Abisolierschnittmesserhalter (29) und die oder eine Federeinrichtung (30) einstückig, insbesondere aus Kunststoff, hergestellt sind und die Federeinrichtung (30) von einem nachgiebigen Materialbereich gebildet ist.

5. Scherenwerkzeug (1) nach einem der vorhergehenden Ansprüche, **wobei** das erste Scherenteil (2) ein Gehäuse (46) mit einem Innenraum (47) ausbildet, in dem mindestens eine Komponente des Scherenwerkzeugs (1) abgestützt, geführt und/oder angeordnet ist, wobei vorzugsweise das Gehäuse (46) zwei Gehäuseteile, insbesondere einen Gehäusedeckel (7) und einen Gehäusegrundkörper (12), aufweist.

6. Scherenwerkzeug (1) nach Anspruch 5, **wobei** sich das zweite Scherenteil (3)
a) durch eine Scherenteilöffnung (62) des Gehäuses (46) des ersten Scherenteils (2) in den Innenraum (47) des Gehäuses (46) und
b) durch den Innenraum (47) des Gehäuses (46) zu einer Trennmesseröffnung (63) des Gehäuses (46)
erstreckt.

7. Scherenwerkzeug (1) nach einem der vorhergehenden Ansprüche, **wobei** das erste Scherenteil (2) und/oder das zweite Scherenteil (3) eine Aufnahme (20, 21) aufweisen/aufweist, in welcher das zugeordnete Trennmesser (9, 10) angeordnet und abgestützt ist.

8. Scherenwerkzeug (1) nach einem der vorhergehenden Ansprüche, **wobei** eine Schraube (8) vorhanden ist, welche
a) eine Reibung vorgibt, die einer Verschwenkung der Scherenteile (2, 3) um das Scherenlager (4) entgegenwirkt und/oder
b) ein Schneidenspiel der Trennmesser (9, 10) vorgibt und/oder
c) die Scherenschwenkachse (5) vorgibt.

9. Scherenwerkzeug (1) nach einem der vorhergehenden Ansprüche, **wobei** Komponenten des Scherenwerkzeugs (1) in dieselbe Montagerichtung gefügt sind, welche parallel zur Scherenschwenkachse (5) orientiert ist.

10. Scherenwerkzeug (1) nach einem der vorhergehenden Ansprüche, **wobei** eine Schneide des Abisolierschnittmessers (11) unter einem spitzen Winkel gegenüber einer Kabelanlagefläche (43), die ein abzuisolierendes Kabel auf der dem Abisolierschnittmesser (11) abgewandten Seite abstützt, angeordnet ist.

11. Scherenwerkzeug (1) nach einem der vorhergehenden Ansprüche, **wobei** Komponenten des Scherenwerkzeugs (1) aus Kunststoff, insbesondere einem biogenen Kunststoff, hergestellt sind.

12. Werkzeuggruppe mit mindestens einem Scherenwerkzeug (1) nach einem der vorhergehenden Ansprüche und mindestens einem Zangenwerkzeug (64), wobei
a) das Scherenwerkzeug (1) und das Zangenwerkzeug (64) identische Trennmesser (9, 10) aufweisen,
b) die Trennmesser (9, 10) des Scherenwerkzeugs (1) über eine Verschwenkung der Scherenteile (2, 3) betätigt werden und
c) die Trennmesser (9, 10) des Zangenwerkzeugs (64) über eine Verschwenkung der Zangenhandhebel (65, 66) betätigt werden.

## Claims

1. Scissors tool (1) comprising a first scissors part (2) and a second scissors part (3), which
a) are mounted on each other via a scissors joint (4) for being pivoted about a scissors pivot axis (5),
b) each comprise a finger accommodation (50, 51) by means of which it is possible to induce a pivoting movement the scissors parts (2, 3) in a closing direction (58), and
c) each comprise a separating cutting blade (9, 10), which are moved towards each other with a pivoting movement of the scissors parts (2, 3) in the closing direction (58),
d) a stripping blade (11) being provided and
e) the stripping blade (11) being movably guided on the first scissors part (2), **characterized in that**
f) an actuating element (28) for the stripping blade (11) is integrated into the finger accommodation (51) of the first scissors part (2), wherein the actuating element (28) is connected to the stripping blade (11) via a drive connection, the drive connection preferably being a rigid connection.

2. Scissors tool (1) of claim 1, **wherein** the stripping blade (11) is biased by a spring device (30) towards an incising position and the stripping blade (11) can be moved from the incising position into an insertion position by actuation of the actuating element (28) against the bias by the spring device (30), wherein preferably the spring device (30) is pretensioned in the incising position when no finger force (54) biases the actuating element (28).

3. Scissors tool (28) of claim 1 or 2, **wherein** the actuating element (28) projects into the finger accommodation (51) of the first scissors part (2), wherein preferably the maximum movements of the actuating element (28) and of the stripping blade (11) are limited by the movement of the actuating element (28) into an insertion position, in which the actuating element (28) and a limitation of the finger accommodation (51) of the first scissors part (2) are arranged flush with one another.

4. Scissors tool (1) of one of the preceding claims, **wherein** the actuating element (28), a stripping blade holder (29) and the or a spring device (30) are manufactured in one single piece, in particular from plastic, and wherein the spring device (30) is formed by a flexible material portion.

5. Scissors tool (1) of one of the preceding claims, **wherein** the first scissors part (2) comprises a housing (46) with an inner chamber (47), in which at least one component of the scissors tool (1) is supported, guided and/or arranged, wherein preferably the housing (46) comprises two housing parts, in particular a housing cover (7) and a housing base body (12).

6. Scissors tool (1) of claim 5, **wherein** the second scissors part (3) extends
a) through a scissors part opening (62) of the housing (46) of the first scissors part (2) into the inner chamber (47) of the housing (46) and
b) through the inner chamber (47) of the housing (46) to a separating cutting blade opening (63) of the housing (46).

7. Scissors tool (1) of one of the preceding claims, **wherein** the first scissors part (2) and/or the second scissors part (3) comprise/comprises an accommodation (20, 21) in which the associated separating cutting blade (9, 10) is arranged and supported.

8. Scissors tool (1) of one of the preceding claims, **wherein** a screw (8) is provided, which
a) provides a friction which counteracts a pivoting of the scissors parts (2, 3) about the scissors joint (4) and/or
b) defines a cutting clearance of the separating cutting blades (9, 10) and/or
c) defines the scissors pivot axis (5).

9. Scissors tool (1) of one of the preceding claims, **wherein** components of the scissors tool (1) are joined in the same assembly direction, which is oriented parallel to the scissors pivot axis (5).

10. Scissors tool (1) of one of the preceding claims, **wherein** a cutting edge of the stripping blade (11) is arranged at an acute angle with respect to a cable contact surface (43) which supports a cable to be stripped on the side facing away from the stripping blade (11).

11. Scissors tool (1) of one of the preceding claims, **wherein** components of the scissors tool (1) are made of plastic, in particular a biogenic plastic.

12. Tool group comprising at least one scissors tool (1) according to one of the preceding claims and at least one pliers tool (64), wherein
a) the scissors tool (1) and the pliers tool (64) comprise identical separating cutting blades (9, 10),
b) the separating cutting blades (9, 10) of the scissors tool (1) are actuated by pivoting the scissors parts (2, 3) and
c) the separating cutting blades (9, 10) of the pliers tool (64) are actuated by pivoting the pliers hand levers (65, 66).

## Revendications

1. Outil à ciseaux (1) comprenant une première partie de ciseaux (2) et une deuxième partie de ciseaux (3),
a) qui sont pivotables l'une par rapport à l'autre autour d'un palier de ciseaux (4) selon un axe de pivotement des ciseaux (5),
b) chacune présentant un logement de doigt (50, 51), au moyen duquel le pivotement des parties de ciseaux (2, 3) dans une direction de fermeture (58) peut être provoqué, et
c) chacune présentant une lame de séparation (9, 10), lesquelles, lors du pivotement des parties de ciseaux (2, 3) dans la direction de fermeture (58), sont déplacées l'une vers l'autre,
d) un lame de coupe pour dénudage (11) étant présent et
e) le lame de coupe pour dénudage (11) étant guidé de manière mobile sur la première partie de ciseaux (2),
**caractérisé en ce que** dans le logement de doigt (51) de la première partie de ciseaux (2), un élément d'actionnement (28) pour
f) le lame de coupe pour dénudage (11) est intégré, l'élément d'actionnement (28) étant relié au lame de coupe pour dénudage (11) par une liaison d'entraînement, la liaison d'entraînement étant de préférence une liaison rigide.

2. Outil à ciseaux (1) selon la revendication 1, dans lequel le lame de coupe pour dénudage (11) est sollicité par un dispositif à ressort (30) en direction d'une position de coupe et le lame de coupe pour dénudage (11) peut être déplacé, par une action sur l'élément d'actionnement (28), à l'encontre de l'action du dispositif à ressort (30), de la position de coupe vers une position d'insertion, le dispositif à ressort (30) étant de préférence précontraint dans la position de coupe sans force du doigt (54) agissant sur l'élément d'actionnement (28).

3. Outil à ciseaux (28) selon la revendication 1 ou 2, dans lequel l'élément d'actionnement (28) fait saillie dans le logement de doigt (51) de la première partie de ciseaux (2), la course maximale de l'élément d'actionnement (28) et du lame de coupe pour dénudage (11) étant de préférence limitée par le déplacement de l'élément d'actionnement (28) dans une position d'insertion, dans laquelle l'élément d'actionnement (28) et une butée du logement de doigt (51) de la première partie de ciseaux (2) sont disposés à fleur l'un de l'autre.

4. Outil à ciseaux (1) selon l'une des revendications précédentes, dans lequel l'élément d'actionnement (28), un support de lame de coupe pour dénudage (29) et le ou un dispositif à ressort (30) sont réalisés en une seule pièce, en particulier en plastique, et le dispositif à ressort (30) est formé par une zone de matériau flexible.

5. Outil à ciseaux (1) selon l'une des revendications précédentes, dans lequel la première partie de ciseaux (2) forme un boîtier (46) avec un espace intérieur (47), dans lequel au moins un composant de l'outil à ciseaux (1) est supporté, guidé et/ou disposé, le boîtier (46) présentant de préférence deux parties de boîtier, en particulier un couvercle de boîtier (7) et un corps principal de boîtier (12).

6. Outil à ciseaux (1) selon la revendication 5, dans lequel la deuxième partie de ciseaux (3) se prolonge à travers une ouverture de partie de ciseaux (62) du boîtier (46) de la première partie de ciseaux (2) dans
a) l'espace intérieur (47) du boîtier (46) et à travers l'espace intérieur (47) du boîtier (46) vers une ouverture de lame de séparation (63) du
b) boîtier (46) s'étend.

7. Outil à ciseaux (1) selon l'une des revendications précédentes, dans lequel la première partie de ciseaux (2) et/ou la deuxième partie de ciseaux (3) présente/présentent un logement (20, 21), dans lequel la lame de séparation (9, 10) associée est disposée et supportée.

8. Outil à ciseaux (1) selon l'une des revendications précédentes, dans lequel une vis (8) est présente, laquelle définit
a) une friction qui s'oppose à un pivotement des parties de ciseaux (2, 3) autour du
b) palier de ciseaux (4) et/ou définit un jeu de coupe des lames de séparation (9, 10) et/ou
c) définit l'axe de pivotement des ciseaux (5).

9. Outil à ciseaux (1) selon l'une des revendications précédentes, dans lequel des composants de l'outil à ciseaux (1) sont assemblés dans la même direction de montage, laquelle est orientée parallèlement à l'axe de pivotement des ciseaux (5).

10. Outil à ciseaux (1) selon l'une des revendications précédentes, dans lequel une arête de coupe du lame de coupe pour dénudage (11) est disposée selon un angle aigu par rapport à une surface d'appui de câble (43), qui supporte un câble à dénuder du côté opposé au lame de coupe pour dénudage (11).

11. Outil à ciseaux (1) selon l'une des revendications précédentes, dans lequel des composants de l'outil à ciseaux (1) sont fabriqués en plastique, en particulier en plastique biogène.

12. Groupe d'outils comprenant au moins un outil à ciseaux (1) selon l'une des revendications précédentes et au moins un outil à pinces (64), l'outil à ciseaux (1) et l'outil à pinces (64) présentant des lames de séparation (9, 10) identiques,
a) les lames de séparation (9, 10) de l'outil à ciseaux (1) étant actionnées par un pivotement des
b) parties de ciseaux (2, 3) et les lames de séparation (9, 10) de l'outil à pinces (64) étant actionnées par un pivotement des
c) leviers manuels de pince (65, 66).
